**Europäisches Patentamt**

**European Patent Office**

**Office européen des brevets**

(19)

(11) Numéro de publication : **0 261 162 B1**

(12)

# FASCICULE DE BREVET EUROPEEN

(45) Date de publication du fascicule du brevet :
**29.01.92 Bulletin 92/05**

(51) Int. Cl.$^5$ : **G06F 12/14,** G07F 7/10

(21) Numéro de dépôt : **87901526.1**

(22) Date de dépôt : **18.03.87**

(86) Numéro de dépôt international :
**PCT/FR87/00079**

(87) Numéro de publication internationale :
**WO 87/05726 24.09.87 Gazette 87/21**

(54) **PROCEDE DE SAUVAGARDE QUALTITATIVE DE DONNEES NUMERISEES.**

(30) Priorité : **19.03.86 FR 8603933**

(43) Date de publication de la demande :
**30.03.88 Bulletin 88/13**

(45) Mention de la délivrance du brevet :
**29.01.92 Bulletin 92/05**

(84) Etats contractants désignés :
**AT BE CH DE FR GB IT LI LU NL SE**

(56) Documents cités :
**EP-A- 0 089 876**
**FR-A- 2 266 222**
**GB-A- 2 140 179**
**GB-A- 2 163 577**
**US-A- 4 211 919**

(73) Titulaire : **INFOSCRIPT**
**26, rue de Chateaudun**
**F-75009 Paris (FR)**

(72) Inventeur : **CAMION, Paul**
**3, rue François Couperin**
**F-78350 Plaisir (FR)**
Inventeur : **GOUTAY, Jean**
**8/13, parc du Petit Beauregard**
**F-78170 La Celle St. Cloud (FR)**
Inventeur : **HARARI, Sami**
**La Farlede**
**Près Toulon, 84 (FR)**

(74) Mandataire : **Martin, Jean-Jacques et al**
**Cabinet REGIMBEAU 26, Avenue Kléber**
**F-75116 Paris (FR)**

EP 0 261 162 B1

**Description**

La présente invention est relative à un procédé et à un dispositif de sauvegarde qualitative d'informations numérisées enregistrées sur un support effaçable ou modifiable.

Avec l'avènement du traitement automatisé de l'information, le problème de la sauvegarde de l'accès aux données traitées ou à traiter s'est tout d'abord posé. Bien que ce problème, notamment en ce qui concerne la protection des données en ligne stockées dans les bases de données des grands systèmes informatiques, ait pu recevoir des solutions efficaces, la mise en oeuvre de ces dernières nécessite l'utilisation de moyens informatiques très importants. Cependant ce type de protection, des intrusions spectaculaires récentes dans des bases de données d'informations concernant la défense de certains états ont pu le révéler, ne peut cependant pas prétendre être absolu. Ce type d'intrusion, mathématiquement et effectivement possible, fait apparaître maintenant un problème d'une autre nature dans la mesure où, ces intrusions sont le plus souvent "transparentes", l'intrus habile pouvant perpétrer son forfait en l'absence de toute trace ou empreinte révélatrice de son identité. Le risque effectivement encouru du fait de telles intrusions comporte non seulement l'accès à des informations confidentielles ou secrètes, à l'insu de l'autorité morale responsable des bases de données correspondantes, dans le cas où l'intégrité qualitative des données est respectée par l'intrus, mais également le risque de la destruction, de la modification en l'absence ou en présence d'intention frauduleuse de l'intrus. En particulier, la presse spécialisée a pu signaler une recrudescence importante de "détournements de fonds sans effraction matérielle" par simple intrusion dans les banques de données d'organismes financiers ou bancaires et modification et falsification frauduleuse des données de compte de ces établissements.

Différents travaux visant à résoudre un problème voisin ont été récemment publiés notamment par la demande de brevet français n° 2 514 593.

Selon la technique décrite dans la demande de brevet précitée, un message dont on veut prendre en compte le contenu est tout d'abord soumis à une contraction, cette contraction étant obtenue par un traitement de type code de Hamming. Une signature est ensuite calculée sur la contraction obtenue au moyen d'un algorithme de chiffrement, la signature chiffrée présentant un nombre de chiffres ou caractères identiques au nombre de chiffres ou caractères de la contraction.

Cependant la technique décrite dans la demande de brevet précitée ne peut prétendre être utilisée en vue d'effectuer une sauvegarde qualitative de données numérisées telles que celles contenues dans une base de données au double motif ci-après.

La contraction du message initial par un traitement linéaire tel que le code de Hamming ne peut en aucune façon prétendre constituer une représentation unique du message initial, plusieurs messages différents pouvant engendrer la même contraction. La sauvegarde qualitative de textes quelconques n'est donc pas possible puisque en définitive, deux messages différents peuvent ainsi produire la même contraction et donc la même signature.

En outre, la séquence de chiffrement de la contraction pour l'élaboration de la signature chiffrée étant réalisée au sein des circuits d'une carte à mémoire protégée, dont la capacité de calcul est modeste, la contraction et la signature chiffrée ne peuvent au plus comporter que six caractères.

La présente invention a pour but de remédier aux inconvénients précités en vue, notamment, une protection absolue de l'accès aux données en ligne des banques de données ne pouvant être totalement garantie, d'assurer un moyen de conservation de l'intégrité de données numérisées par une sauvegarde qualitative de ces données enregistrées sur un support effaçable ou modifiable.

Un autre objet de la présente invention est la mise en oeuvre d'un procédé de sauvegarde qualitative de données numérisées dans lesquels une signature parfaitement représentative d'un texte ou message unique et de son auteur signataire est apposée sur le support sur lequel les données sont enregistrées en clair, la signature constituant un sceau.

Un autre objet de la présente invention est la mise en oeuvre d'un procédé de signature, chaque texte, différent, ayant une signature pour une clef déterminée, cette signature étant indépendante du texte de départ.

Un autre objet de la présente invention est également, dans le cas de transmission d'informations signées conformément à la présente invention par un détenteur signataire, la possibilité pour l'utilisateur destinataire d'une authentification tant de l'intégrité des informations transmises que de l'origine de celles-ci.

Un autre objet de la présente invention est également, par la mise en oeuvre du procédé de l'invention relativement à une pseudo-information, la définition entre signataire de la pseudo-information et destinataire d'un code d'accès aléatoire temporaire.

Le procédé de sauvegarde qualitative d'informations numérisées enregistrées sur un support effaçable ou modifiable, objet de l'invention, est remarquable en ce qu'il consiste à établir une signature chiffrée représentative des informations et de l'identité du détenteur de ces informations au moyen d'un algorithme de calcul et à enregistrer celle-ci sur le support des informations. Les paramètres de calcul de la signature sont enregistrés sur au moins un support inviolable.

Le procédé pour la sauvegarde qualitative d'informations numérisées enregistrées sur un support effaçable ou modifiable, objet de l'invention, est remarquable en ce qu'il comprend des premiers moyens de mémorisation dans lesquels sont mémorisées la ou les clefs secrètes du détenteur signataire ou du destinataire des informations et des deuxièmes moyens de mémorisation dans lesquels est mémorisé un programme de calcul d'une ou plusieurs signatures conformément au procédé de l'invention. Des moyens de calcul de la ou des signatures et des moyens d'inscription de cette ou ces signatures sur le support des informations à sauvegarder sont prévus. Des moyens de comparaison de la signature (S,Sc) inscrite sur le support des informations avec la signature calculée et des moyens de validation d'utilisation des informations sauvegardées sur coïncidence de la signature (S,Sc) calculée et de la signature enregistrée sur le support d'enregistrement des informations (Ii) sont en outre prévus. Des moyens périphériques de saisie ou de visualisation des données permettent un dialogue interactif entre système et utilisateur signataire ou destinataire des données.

L'invention trouve application ainsi qu'il sera décrit en détail dans la suite de la description à l'échange de données numériques entre utilisateurs, à la protection de fichiers entres localement, à la protection contre les doubles lectures de données sur identification du demandeur, à la gestion des programmes distribués sur réseau à des terminaux localement programmables, à la gestion de la maintenance pour progiciel, à la gestion de fichiers internes au cours d'utilisation périodique de ceux-ci, à la vérification des opérations comptables ou de gestion, à l'archivage des informations comptables ou bibliographiques, à la conservation de bibliothèques de programmes, de copies de sécurité de bases de données, de fichiers conservés en local et en central par calcul et comparaison des signatures correspondantes.

Elle sera mieux comprise à la lecture de la description et à l'observation des dessins ci-après dans lesquels :

– La figure 1 représente de manière schématique des éléments essentiels permettant la mise en oeuvre du procédé objet de l'invention,

– la figure 2 représente, de manière schématique, un mode de réalisation particulièrement avantageux d'un moyen permettant la mise en oeuvre du procédé objet de l'invention,

– la figure 3 représente un schéma illustratif du procédé de sauvegarde qualitative d'informations, objet de l'invention, dans le cas où les informations sont transmises d'un signataire à un destinataire,

– la figure 4 représente schématiquement un mode de réalisation particulièrement avantageux d'un algorithme de calcul de la signature conformément au procédé de l'invention,

– la figure 5 représente une variante de réalisation de mise en oeuvre de l'algorithme de calcul, tel que représenté en figure 4,

– la figure 6 représente une autre variante de réalisation et de mise en oeuvre d'un algorithme de calcul de la signature, tel que représenté en figure 4, dans le cas ou un grand nombre d'informations à sauvegarder constituant le message ou texte est prévu,

– la figure 7 représente schématiquement une variante de mise en oeuvre du procédé de sauvegarde qualitative, objet de l'invention, cette variante étant particulièrement avantageuse en vue d'obtenir une hiérarchisation successive des signatures pour un texte ou message considéré,

– la figure 8 représente un schéma synoptique d'un dispositif permettant la mise en oeuvre du procédé objet de l'invention, ce dispositif étant particulièrement adapté à la mise en oeuvre du procédé objet de l'invention,

– la figure 9 représente une variante de réalisation du dispositif pour la sauvegarde qualitative d'informations numérisées enregistrées dans le cas où la quantité d'informations constitutives du message est relativement réduite et où une utilisation domestique peut être envisagée,

– la figure 10 représente enfin un organigramme des fonctions du dispositif pour la sauvegarde qualitative d'informations numérisées objet de l'invention, tel que représenté précédemment en figures 8 ou 9.

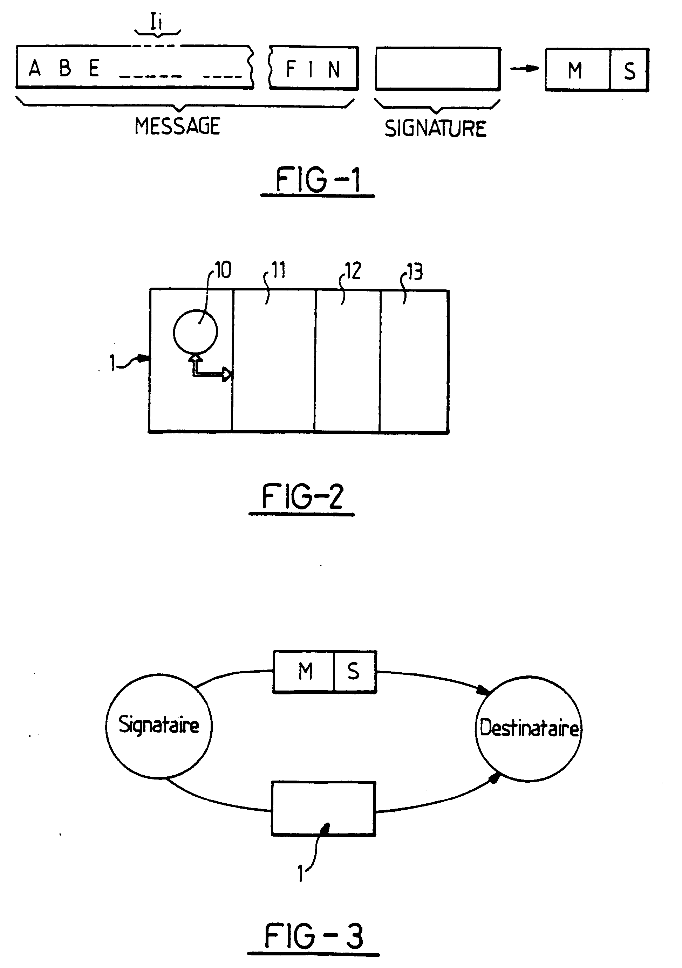

Le procédé de sauvegarde qualitative d'informations numérisées enregistrées sur un support effaçable ou modifiable, objet de l'invention, sera tout d'abord décrit en liaison avec les figures 1 et 2.

Conformément à la figure 1, le procédé de sauvegarde qualitative d'informations, objet de l'invention, consiste à établir une signature chiffrée, notée S, représentative des informations et de l'identité du détenteur de ces informations au moyen d'un algorithme de calcul. La signature S est enregistrée sur le support des informations, les informations constituant un texte ou un message. Le message ou texte est par exemple enregistré en clair, afin d'assurer la sauvegarde du message ou du texte ou la transmission de celui-ci. Par enregistrement en clair du message ou du texte sur le support effaçable ou modifiable, on entend bien entendu que celui-ci est enregistré sur ce support en l'absence de tout chiffrement ou de tout codage quelconque visant à en dissimuler la signification.

Les paramètres de calcul de la signature S sont enregistrés sur au moins un support inviolable.

Ainsi qu'il a été représenté en figure 2, le support inviolable peut avantageusement être constitué par une carte à mémoire protégée. Sur la figure 2 on a représenté la carté à mémoire protégée, de manière schématique, celle-ci étant réputée comporter en 10 une zone active constituée par exemple par un microprocesseur intégré à la carte, en 11 une zone secrète totalement inaccessible, protégée par le microprocesseur 10, en 12 une zone protégée en lecture et en écriture et accessible seulement suite à introduction d'un code donné, et en 13 une sone totalement libre à l'écriture et à la lecture. Sur la figure 2, la carte à mémoire est référencée 1. Les cartes à mémoire protégées sont normalement disponibles dans le commerce et on pourra se reporter utilement aux demandes de brevet français n° 74 10191 et leur addition 75 08184 et 75 08185 délivrées le 10 Mars 1980 pour une description plus détaillée de dispositifs tels que des cartes à mémoire protégée.

Conformément au procédé objet de l'invention, l'algorithme de calcul est avantageusement un algorithme de chiffrement du message ou texte à sauvegarder, et de compression des informations contenues dans le texte à sauvegarder à partir d'au moins une clef secrète associée au signataire détenteur des informations.

Bien entendu, l'algorithme de chiffrement et de compression des informations notées Ii sur la figure 1 est choisi de façon à assurer une indépendance relative entre tout texte déterminé et la signature S engendrée à partir de ce texte. Par indépendance relative entre le contenu du texte ou message et la signature calculée au moyen de l'algorithme conformément à la présente invention, on comprendra, d'une part, que pour un texte donné une seule signature S est obtenue et que d'autre part, toute modification la plus minime au niveau de l'information Ii contenue dans le message ou dans le texte a pour effet d'engendrer une signature S différente de la signature d'origine en l'absence de corrélation apparente.

Un exemple d'utilisation particulièrement avantageux du procédé de sauvegarde qualitative d'informations numérisées conforme à la présente invention sera décrit en liaison avec la figure 3.

Conformément à cette figure, et notamment en vue d'assurer la transmission des informations sauvegardées conformément au procédé objet de l'invention, les informations devant être transmises à un destinataire, le procédé objet de l'invention consiste à adresser le support inviolable 1 sur lequel les paramètres de calcul de la signature chiffrée S ont été enregistrés au destinataire, puis à transmettre les informations sauvegardées sur le support et la signature chiffrée S au destinataire. Le destinataire étant en possession du support inviolable 1 qui lui a été adressé par toute voie, ainsi que du message M et de sa signature S, il peut alors en vue de contrôler le contenu des données transmises et reçues et à partir des paramètres de calcul de la signature S contenus dans le support inviolable 1, établir une signature chiffrée de contrôle S', à partir des informations sauvegardées reçues, suite à la transmission. Il peut ensuite comparer la signature chiffrée reçue par transmission, notée S, et la signature chiffrée de contrôle notée S'. L'identité des informations sauvegardées et des informations reçues par le destinataire et l'origine authentifiée de ces informations est alors obtenue à la coïncidence de la signature chiffrée S et de la signature chiffrée de contrôle S'.

Bien entendu, la clef secrète ou les clefs secrètes constituant au moins une partie des paramètres de calcul de la signature S sont enregistrées dans la zone protégée secrète inaccessible 11 de la carte à mémoire 1 ou support inviolable, celui-ci ayant été mis à disposition du destinataire et éventuellement même du signataire. Les supports de mémorisation inviolables tels que les cartes à mémoire constituent actuellement des supports dont le caractère d'inviolabilité est actuellement le meilleur. En effet, la structure mécanique de ce type de composant électronique et la protection des mémoires intégrées à ce composant par un microprocesseur en ce qui concerne l'accès à celles-ci, permet de s'assurer d'un haut niveau de protection.

Cependant, la mise en oeuvre du procédé objet de l'invention n'est pas limitée à l'utilisation de support de mémorisation inviolable tel que des cartes à mémoire protégée. En effet, on peut bien entendu envisager la mise en oeuvre du procédé à l'aide de moyens dans lesquels le support inviolable peut être constitué par tout circuit protégé activement en ce qui concerne l'accès aux zones mémorisées par un microprocesseur ou analogue, et structurellement par tout moyen adapté.

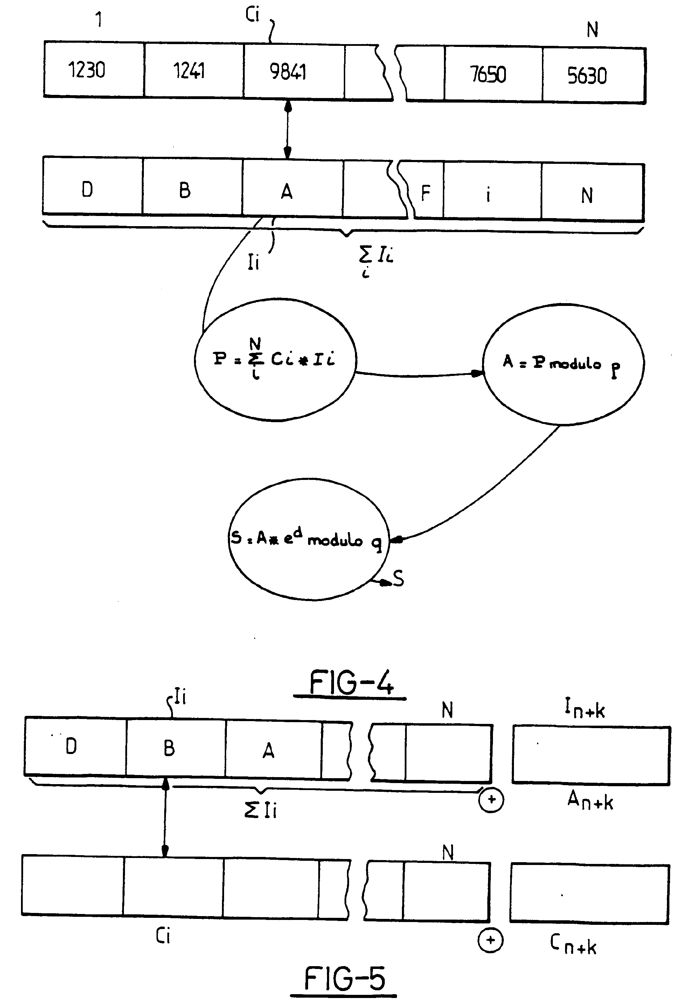

Un mode de mise en oeuvre du procédé de sauvegarde qualitative d'informations numérisées conformément à l'invention sera maintenant décrit en liaison avec les figures 4 à 7.

Conformément à une caractéristique avantageuse du procédé objet de l'invention, la clef secrète et la signature S peuvent être constituées par un mot comprenant un nombre de caractères ou chiffres identiques. La signature et/ou la ou les clefs secrètes peuvent être constituées par un mot comprenant également des caractères alpha-numériques. Ainsi, pour un mot comprenant n caractères, tels que par exemple des caractères alpha-numériques définis par le code ASCII étendu, lequel comprend 256 caractères, la probabilité d'obtention de la ou des clefs secrètes ou éventuellement,pour la mise en oeuvre de texte différent, d'une même signature S est de l'ordre de

$\left(\dfrac{1}{256}\right)^n$ ou au plus égale à $\left(\dfrac{1}{10}\right)^n$ lorsque des chiffres sont utilisés.

Ainsi qu'il est en outre représenté en figure 4, en vue d'établir la signature chiffrée S représentative des informations et de l'identité du détenteur des informations, l'algorithme de calcul permettant d'effectuer le chiffrement des informations notées Ii puis la compression de ces informations, peut consister, selon un mode de réalisation avantageux, à initialiser la création d'une suite de nombres aléatoires ou pseudo-aléatoires à plusieurs chiffres, à partir de la ou des clefs secrètes.

Sur la figure 4, les informations Ii sont notées DBA et ainsi de suite, et les nombres aléatoires ou pseudo-aléatoires à plusieurs chiffres sont notés Ci. On a ainsi représente N nombres aléatoires sur cette figure.

Conformément à une caractéristique particulièrement avantageuse de l'objet de l'invention, la suite de nombres aléatoires notés Ci comporte un même nombre de termes Ci, ou un diviseur de ce nombre, que le nombre de caractères Ii de l'information à sauvegarder. Conformément au procédé objet de l'invention, l'algorithme de chiffrement permet alors d'effectuer le produit scalaire, noté P, terme à terme de la suite de nombres aléatoires Ci et de l'information à sauvegarder Ii.

Le produit scalaire ainsi obtenu est noté

$$P = \sum_{i=1}^{N} Ii * Ci$$

L'algorithme de calcul permet alors d'effectuer une réduction modulaire du produit scalaire P modulo p de façon à définir un nombre A = P modulo p où A représente le reste de la division de P par p, dans lequel p est un nombre premier comportant un nombre de chiffres égal au nombre de caractères de la ou des clefs secrètes ou de la signature S. L'algorithme de calcul permet ensuite d'effectuer une exponentiation modulaire du nombre A de façon à définir un nombre S = A * $e^d$ modulo q, où S représente le reste de la division de A * $e^d$ par q, dans lequel q est un nombre premier comportant un nombre de chiffres égal au nombre de caractères de la ou des clefs secrètes ou de la signature et où d représente un ou plusieurs chiffres consécutifs ou non de la ou des clefs secrètes. le nombre S ainsi obtenu constitue la signature chiffrée.

Afin d'augmenter la solidité cryptographique de la signature chiffrée S, il est également possible, conformément au procédé objet de l'invention, d'ajouter au produit scalaire P une valeur aléatoire produit de nombres supplémentaires aléatoires ou pseudo-aléatoires notés $C_{N+K}$ sur la figure 5, et de valeurs numériques arbitraires notées $A_{N+K}$ sur cette même figure, valeurs telles que la date, l'heure, un numéro d'identification du détenteur d'informations ou un code d'identitication de ce demandeur consistant par exemple en des caractères alpha-numériques, ou éventuellement un nombre aléatoire d'un ou plusieurs chiffres.

Bien entendu, aux caractères Ii de l'information à sauvegarder, peuvent être ajoutées, par concaténation, des chaînes de caractères représentatives de valeurs numériques significatives arbitraires, telles que la date, l'heure, un numéro d'identification ou code d'identification du détenteur d'informations ou un nombre aléatoire ainsi que précédemment cité. Dans ce cas, ces informations supplémentaires sont directement intégrées à l'information notée ΣIi à sauvegarder. Bien entendu, la suite de nombre pseudo-aléatoires Ci est alors complétée par des nombres aléatoires notés $C_{N+K}$ complétant la suite.

Le procédé objet de l'invention tel que décrit précédemment peut avantageusement être mis en oeuvre dans le cas où le texte ou message à sauvegarder qualitativement comporte par exemple 250 caractères alphanumériques. Dans ce cas, et pour les applications les plus courantes, la signature S et la ou les clefs secrètes peuvent alors comporter par exemple six caractères ou chiffres décrits.

Cependant, le procédé de sauvegarde qualitatif d'information numérisée objet de l'invention, n'est pas limité à un tel nombre de caractères constituant le message ou texte. Bien entendu, il peut avantageusement être utilisé dans le but de sauvegarder qualitativement des informations de banques de données, le nombre de caractères de ces informations pouvant atteindre plusieurs milliers. Dans ce cas, il est avantageux d'utiliser pour la mise en oeuvre du procédé, un ordinateur de grande capacité de calcul, afin d'obtenir des temps de calcul minimum pour le calcul des signatures S.

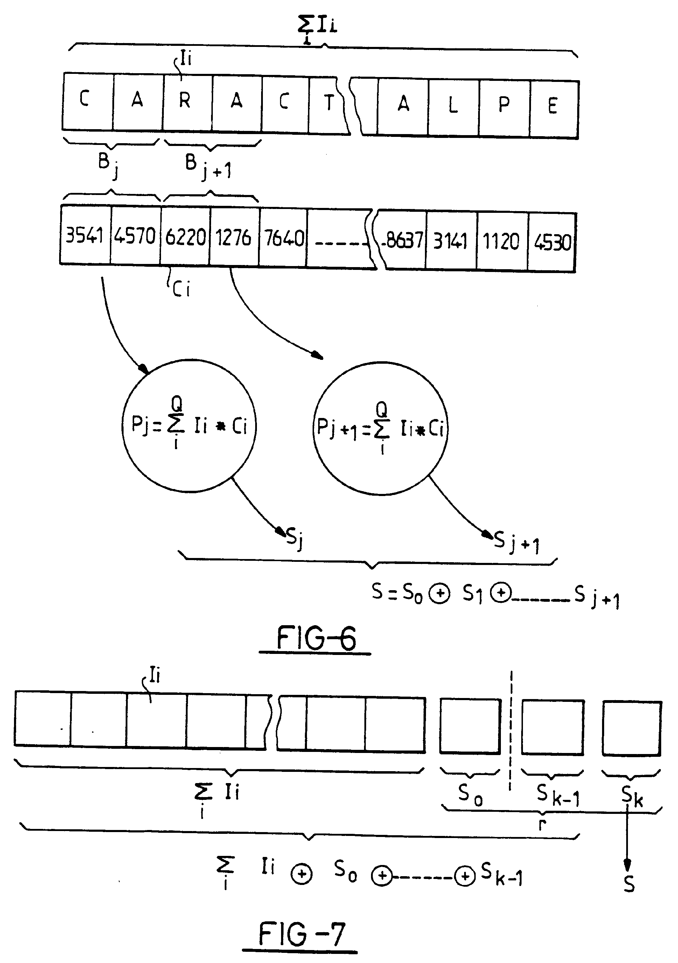

Dans le cas précédemment décrit, les informations à sauvegarder Ii et les nombres aléatoires Ci peuvent avantageusement être subdivisés en blocs de données notés Bj, ainsi qu'il est représenté en figure 6. Les blocs Bj contiennent un nombre déterminé Q de caractères et le produit scalaire P est calculé de manière avantageuse pour chacun des blocs Bj, de façon à définir des produits scalaires partiels notés Pj. Bien entendu, les produits scalaires partiels Pj sont de la forme :

$$Pj = \sum_{i}^{Q} Ii * Ci \ .$$

Ainsi, une signature partielle notée Sj est calculée pour chacun des blocs Bj et la suite des signature Sj constitue la signature finale représentative de l'ensemble des informations à sauvegarder.

Ainsi qu'il apparaît en outre en figures 1 à 6, les nombres aléatoires ou pseudo-aléatoires Ci constituant les suites de nombres aléatoires sont avantageusement des nombres comportant un nombre 1 de chiffres ou caractères égal au nombre de caractères de la ou des clefs utilisées. De manière avantageuse mais non limitative, les caractères Ii de l'information à sauvegarder peuvent être groupés de façon que le nombre de chiffres de chaque terme $C_i$ de la suite de nombre aléatoires soit supérieur au nombre de caractères constituant un groupement. On comprendra bien sûr que les caractères constituant l'information à sauvegarder, le caractère noté $l_i$, sont enregistrés sous forme numérisée, c'est-à-dire en fait sous forme de bits d'informations zéro ou 1. Dans ce cas, une pluralité de bits constituant la représentation totale ou partielle d'un caractère peut être groupée de façon à constituer un groupement tel que défini précédemment. Le produit terme à terme des groupements ou caractères et des nombres constituant les nombres aléatoires ou pseudo-aléatoires de la suite de nombres notés $C_i$ s'entend comme le produit arithmétique de tout groupement ou caractère d'ordre i correspondant.

Une variante particulièrement avantageuse du procédé de sauvegarde qualitative d'informations numérisées enregistrées sur un support effaçable ou modifiable sera décrit maintenant en liaison avec la figure 7.

Selon la figure précitée, le procédé conformément à l'invention, consiste pour une même quantité d'informations à sauvegarder, quantité d'informations notée $\Sigma l_i$ correspondant à une longueur de texte ou de message donné, à calculer de manière itérative une pluralité notée r de signatures, elles-mêmes notées $S_K$, successives. Bien entendu, les signatures $S_K$ sont calculées à partir de l'algorithme de calcul tel que précédemment décrit par exemple. Conformément à un mode de réalisation avantageux du procédé de l'invention, les signatures notées $S_{K-1}$ sont successivement intégrées, comme chaîne de caractères, à l'information à sauvegarder $\Sigma l_i$. Les signatures peuvent par exemple être intégrées par concaténation aux informations $\Sigma l_i$. Suite à l'intégration d'une signature d'ordre K-1, aux informations $\Sigma l_i$ précitées, une signature d'ordre supérieure $S_K$ est alors calculée à nouveau sur l'ensemble des informations à sauvegarder auxquelles ont été ajoutées les signatures d'ordre inférieur considérées comme chaîne de caractères. On obtient ainsi une définition particulièrement intéressante de signatures successives permettant une hiérarchisation des signatures et notamment de la signature finale notée $S_K$, à partir des signatures d'ordre inférieur $S_0$, $S_{K-1}$, pour un même contenu d'informations notées $\Sigma l_i$. Bien entendu, dans ce cas, la signature $S_K$ finale constitue en fait la signature S au sens du procédé objet de l'invention ou une signature à haut degré de hiérarchie.

Une autre variante particulièrement avantageuse du procédé de sauvegarde qualitative de l'information numérisée, objet de l'invention, peut consister préalablement à l'inscription sur le support des informations $l_i$ ou sur le support inviolable de la signature S à soumettre en outre la signature S précitée à un traitement de chiffrement à partir, par exemple, d'une clef secrète de chiffrement, de façon à obtenir une signature chiffrée notée Sc. Le traitement de chiffrement sur la signature S peut être réalisé à partir d'un programme de calcul de chiffrement de type classique, tel que par exemple un programme de calcul connu sous le nom de programme ou méthode DES. Dans ce cas, la signature est chiffrée, Sc, et présente un nombre de caractères identique à celui de la signature S. Le traitement de chiffrement peut bien entendu être appliqué soit à la signature S obtenue par simple application du procédé objet de l'invention, tel que déjà décrit, ou suite à une application itérative du procédé, la signature S considérée étant alors la dernière obtenue d'ordre K ainsi que déjà décrit précédemment.

Dans le cas où la signature S soumise au traitement de chiffrement précité comporte un nombre de caractères limité à six pour l'application particulière précédemment décrite, le traitement de chiffrement peut avantageusement être alors réalisé au niveau des circuits du support inviolable, lorsque celui-ci est constitué par une carte à mémoire. Dans ce cas, la signature chiffrée obtenue et calculée par le microprocesseur de la carte à mémoire 1 est alors transférée pour inscription sur le support des informations $l_i$. L'élaboration d'une signature chiffrée Sc permet d'obtenir bien entendu, une amélioration de la solidité cryptographique de la signature ainsi traitée.

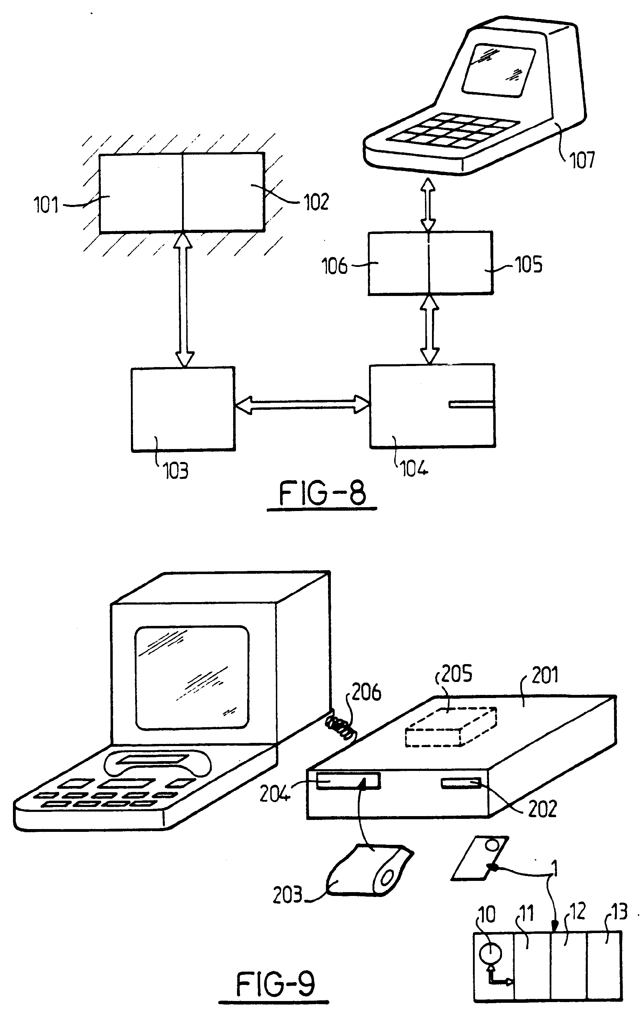

Une description plus complète d'un dispositif permettant la mise en oeuvre du procédé objet de l'invention pour la sauvegarde qualitative d'informations numérisées enregistrées sur un support effaçable ou modifiable, sera maintenant donnée en liaison avec les figures 8 à 10.

Ainsi qu'il apparait en figure 8, le dispositif permettant d'assurer la sauvegarde qualitative d'informations numérisées, objet de l'invention, comporte des premiers moyens de mémorisation notés 101, dans lesquels sont mémorisées la ou les clefs secrètes du détenteur signataire ou du destinataire des informations $l_i$ constituant le texte ou message à sauvegarder. Des deuxièmes moyens 102 de mémorisation sont également prévus dans lesquels est mémorisé un programme de calcul d'une ou plusieurs signatures S, Sc, conformément au procédé tel que décrit précédemment dans la description. Des moyens de calcul notés 103 de la ou des signatures S, Sc et d'inscription 104 de ces signatures S, Sc sur le support des informations $l_i$ à sauvegarder sont également prévus. Des moyens de comparaison 105 de la signature S ou Sc inscrites sur le support des informations avec la signature calculée sont également prévus et des moyens de validation 106 permettent de valider l'utilisation des informations sauvegardées sur coïncidence de la signature S ou Sc calculée et de la signature enregistrée sur le support d'enregistrement des informations $l_i$. Bien entendu, des moyens périphériques notés 107 de saisie et/ou de visualisation des données sont également prévus, afin d'assurer un dialogue interactif avec l'utilisateur.

On comprendra en particulier que le dispositif tel que décrit en figure 8 peut aussi bien être utilisé par le détenteur signataire des informations à sauvegarder que par le destinataire de ces informations sauvegardées, celui-ci devant alors procéder à une vérification pour authentification de signature, permettant en celà l'authentification des données reçues.

Les premiers et deuxièmes moyens de mémorisation 101 et 102 sont constitués par des supports de mémorisation inviolables. On comprendra bien entendu que le dispositif objet de l'invention tel que représenté en figure 8 peut être constitué par un ordinateur ou un microordinateur. Dans le cas où les indications à sauvegarder sont constituées par une très grande quantité d'informations, telles que des informations comptables, l'ordinateur peut avantageusement être constitué par un ordinateur de grande capacité de calcul, tel qu'un ordinateur IBM 30 - 33 permettant d'opérer 4,8 millions d'instructions par seconde. Dans ce cas, le nombre de caractères de la signature pourra être avantageusement porté à 24 et une procédure de traitement par blocs d'informations notés Bj pourra avantageusement être utilisée. Le langage de programmation permettant la réalisation des programmes de calcul correspondant pourra par exemple être le langage COBOL. Au contraire dans le cas où le nombre ou quantité d'informations à traiter, c'est-à-dire, pour des textes ou messages de longueur beaucoup plus réduite, sera envisagé, un micro-ordinateur normalement disponible dans le commerce, pourra être utilisé. Dans ce cas, le langage de programmation pourra avantageusement être constitué par un langage d'assemblage. En outre, les supports de mémorisation constituant les premiers et deuxièmes moyens de mémorisation 101, 102, peuvent être constitués par des supports de mémorisation inviolables. Sur la figure 8, le caractère d'inviolabilité des supports 101, 102 est représenté par des hachures entourant les éléments 101, 102. Dans le cas d'ordinateurs ou même de micro-ordinateurs, les zones mémoires correspondantes pourront être munies de structures adaptées à en assurer l'inviolabilité. Cependant, les supports de mémorisation inviolables pourront également être constitués par des cartes à mémoire protégée. Ce mode de réalisation apparaît particulièrement avantageux en particulier dans le cas où le dispositif est constitué par exemple par un micro-ordinateur, les micro-ordinateurs comportant un lecteur de carte à mémoire protégée, tendant à constituer actuellement une nouvelle norme de commercialisation.

Bien entendu, la réalisation d'un dispositif conforme à l'invention au moyen d'un micro-ordinateur n'est pas indispensable et il pourra être avantageux de réaliser le dispositif objet de l'invention à l'aide de composant ou système électronique moins onéreux, en vue d'utilisations domestiques ou d'utilisations pour lesquelles la quantité d'informations ou les messages ou textes est plus faible.

Dans le cas précédemment cité, le dispositif permettant la mise en oeuvre du procédé objet de l'invention peut avantageusement comporter en vue de constituer des moyens périphériques un terminal de visualisation du genre "Minitel" distribué par l'Administration des Postes et Télécommunications. Sur la figure 9, un tel dispositif a été représenté et le terminal de visualisation "Minitel" a été référencé 200. Conformément à cette figure, le dispositif objet de l'invention comprend en outre un lecteur de cartes à mémoire protégée noté 201, le lecteur comportant une fente notée 202 d'introduction de cartes à mémoire 1. Le lecteur de cartes à mémoire protégée 201 est également avantageusement muni d'une cartouche enfichable 203 comportant des mémoires mortes dans lesquelles est stocké le programme de calcul de la signature ou des signatures S, Sc. La cartouche enfichable 203 peut avantageusement être enfichée dans un logement d'insertion 204 prévu dans le lecteur de cartes 201. Le lecteur de cartes à mémoire 201 est en outre équipé d'un microprocesseur 205, celui-ci ayant pour rôle d'assurer le chargement des programmes emmagasinés dans la cartouche 203 et le chargement des données secrètes mémorisées dans la carte à mémoire 1. La liaison avec le terminal du type Minitel 200 est assurée par câble 206.

En outre, la signature S étant soumise à un traitement de chiffrement conformément au procédé tel que précédemment décrit, un programme de chiffrement peut être mémorisé dans les zones protégées du support de mémorisation inviolable 11 de la carte à mémoire 1, le calcul de chiffrement de la signature S étant alors réalisé au sein de la carte à mémoire 1.

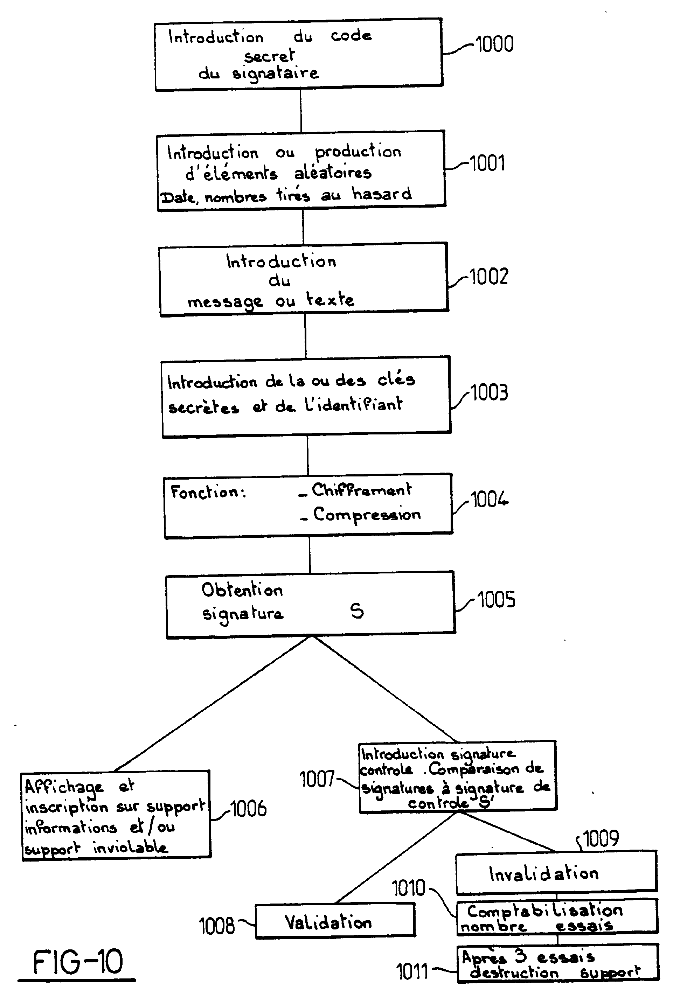

Afin d'assurer au système une convivialité de haut niveau vis-à-vis de l'utilisateur, que celui-ci soit le détenteur des informations signataires ou le destinataire de ces informations, le dispositif objet de l'invention comporte en mémoire permanente un programme de gestion de type "menu" permettant sur incitation de l'utilisateur, par affichage de pages écran de dialogue interactif, la réalisation d'une pluralité de fonctions, lesquelles seront décrites en liaison avec la figure 10.

Le programme de type "menu" précité permet tout d'abord en 1000 d'introduire le code personnel de l'utilisateur signataire ou destinataire. Puis il permet en outre d'introduire en 1001 des paramètres arbitraires ou aléatoires tels que la date, l'heure ou des chiffres aléatoires. Bien entendu, l'introduction de ces paramètres peut être remplacée par la production par le système de ces paramètres, en particulier lorsque le système dans le cas d'un micro-ordinateur notamment ou d'un ordinateur est muni d'une horloge interne à partir de laquelle les paramètres de date et d'heure peuvent être directement introduits. En outre, le programme "menu" permet également l'introduction du message ou du texte Σli à sauvegarder, cette opération étant notée en 1002. Bien entendu, l'introduction de la ou des clefs secrètes et de l'identifiant du signataire par exemple est effectuée en 1003 . On notera que dans le cas où une carte à mémoire est utilisée, l'introduction de la ou des clefs secrètes et de l'identifiant du signataire en 1003 est effectuée au moyen du support inviolable tel qu'une carte à mémoire protégée, l'introduction de la ou des clefs secrètes mémorisée dans la zone protégée de la carte à mémoire 1 peut par exemple être effectuée après insertion de la carte 1 dans le lecteur 201 sur simple introduction du code personnel de l'utilisateur au clavier du'système lecteur de cartes, la ou les clefs secrètes introduites étant bien entendu inconnues elles-mêmes de l'utilisateur. Dans ce cas, l'utilisateur destinataire est bien sûr titulaire d'une même carte à mémoire dans laquelle les codes et/ou les paramètres de calcul de la signature ou des signatures sont également mémorisés. Dans le cas où, au contraire, le dispositif ne comporte pas de système de lecteur de cartes à mémoire 201, il est bien entendu toujours possible d'introduire directement les clefs secrètes et les paramètres de calcul de la signature directement au clavier constituant périphériques du dispositif. Bien entendu, le degré de sécurité requis imposera les solutions les plus adaptées.

Le déroulement du programme de calcul de chiffrement et de compression modulaire, tel que précédemment décrit dans la description est alors effectué par l'intermédiaire du microprocesseur, du micro-ordinateur ou du lecteur de cartes 201 associé à un terminal de visualisation, ou, enfin, par l'unité centrale de l'ordinateur. Sur la figure 10, le calcul de la signature est représenté aux étapes 1004 et 1005. Suite à l'obtention de la signature S ou de toute signature telle que précédemment définie dans la description, l'affichage et l'inscription sur le support des informations et/ou sur le support inviolable est réalisé à l'étape 1006.

En outre, ainsi qu'il apparaît en figure 10, le programme de gestion de type menu permet également à un utilisateur destinataire d'introduire la signature à vérifier pour comparaison à la signature stockée ou transmise. Une comparaison de la signature S inscrite sur le support des informations li et de la signature de contrôle S' est alors effectuée, les opérations précitées étant représentées en 1007 sur la figure 10. En cas de coïncidence de la signature de contrôle S' et de la signature S, le dispositif procède alors à une validation de signature et des informations transmises en 1008.

Ainsi qu'il apparaît en outre en figure 10, dans le cas où une invalidation de signature est obtenue à l'étape 1009, les pages écran comportent une page écran de signalisation de risque de destruction des zones mémoires du support inviolable après un nombre déterminé d'essais infructeux de validation de signature. Les pages écran précitées sont représentées par exemple en 1011, après une étape de comptabilisation du nombre d'essais infructeux représentés en 1010.

On comprendra bien entendu que les procédures de signature et de validation de signature mises en oeuvre par le dispositif précédemment décrit, sont séparées. La procédure de validation de signature est conditionnellement autorisée pour des codes d'identification de l'utilisateur identifiant, donc l'utilisateur destinataire, distincts des codes d'identification de l'utilisateur signataire. Ainsi, cette procédure permet à l'utilisateur identifiant destinataire de vérifier des signatures qu'il ne peut pas lui-même écrire. La seule connaissance requise à l'utilisateur identifiant destinataire pour assurer cette opération est par exemple le code personnel, consistant par exemple en des caractères alpha-numériques, du détenteur d'informations ou signataire.

Une autre application particulièrement intéressante du procédé et du dispositif objet de l'invention sera maintenant décrite également en liaison avec la figure 10. Conformément à un aspect particulier du dispositif et du procédé objet de l'invention, pour un nombre aléatoire d'identification déterminé introduit en 1001 par l'utilisateur, lequel possède le code de ce nombre aléatoire d'identification, l'introduction d'une pseudo-information à sauvegarder en 1002, pseudo-information consistant en une répétition à l'identique de caractères li déterminés sur un nombre arbitraire de caractères, permet d'engendrer un code d'accès aléatoire inviolable temporaire représentatif de cet utilisateur. Sur transmission du code d'identification et du nombre aléatoire d'identification à un utilisateur récepteur, la procédure de validation du code d'accès aléatoire inviolable temporaire est alors autorisée.

On comprendra bien entendu que la pseudo-information peut consister en n'importe quel caractère arbitraire, tel que par exemple un caractère alphanumérique du code ASCII étendu et notamment en un espacement, celui-ci étant susceptible de procurer la probabilité d'erreur minimum pour la phase d'introduction d'un message ou de texte relatif à la pseudo-information.

On comprendra alors que le code d'accès aléatoire inviolable temporaire représentatif de l'utilisateur consiste bien entendu en la signature calculée sur la pseudo-information à laquelle a été ajouté, par concaténation, le nombre aléatoire d'identification introduit par l'utilisateur. Le procédé ainsi utilisé est particulièrement avantageux en ce qu'il permet bien entendu pour un organisme serveur, tel qu'une base de données, l'identification de tout abonné, à partir de codes aléatoires temporaires représentatifs de cet abonné. Ainsi, l'accès au serveur ou à la base de données correspondante est protégé par un système de code d'accès totalement renouvelable et pour lequel la période de renouvellement peut être prise arbitrairement à l'initiative de l'organe serveur. On comprendra en effet que le changement du caractère répété à l'identique à l'initiation de l'organe serveur permet en fait de provoquer un changement complet du pseudo-texte ou pseudo-informations nécessaire pour engendrer le code d'identification ou d'accès.

Le procédé et le dispositif objet de l'invention apparaissent ainsi particulièrement avantageux en ce qu'ils permettent d'une part la protection de l'accès à un organisme serveur et également la sauvegarde qualitative des données numérisées enregistrées sur support effaçable ou modifiable de cet organisme serveur lorsque ces données sont en ligne, par constitution d'une bibliothèque de référence.

Les applications du procédé et du dispositif objet de l'invention ne sont cependant pas limitées à cette seule utilisation.

Ainsi, le procédé et le dispositif objet de l'invention peuvent avantageusement être utilisés pour l'échange de données avec l'extérieur, le destinataire des informations, en conservant les sceaux déjà vérifiés, évitant aisément les doubles lectures. En outre, dans le cas de réseau de terminaux éloignés, la signature peut être utilisée pour protéger des fichiers entrés localement. Il est en effet facile de vérifier que le signataire est bien habilité dans les payes, les facturations ou analogues auprès de l'ordinateur central et que les données n'ont pas été altérées. La signature peut également être utilisée en vue d'assurer la prévention contre les doubles lectures, en ce cas, la signature est seulement comparée avec les signatures précédemment calculées. En cas de coïncidence de signature, celle-ci témoigne de l'existence d'une lecture du fichier correspondant.

Le procédé et le dispositif objet de l'invention peuvent en outre être utilisés avantageusement pour la gestion de programmes distribués. En effet, dans un réseau contenant des terminaux locaux programmables, l'ordinateur central doit pouvoir s'assurer que tous les terminaux ont des copies à jour des programmes corrects. Une telle vérification peut être effectuée par envoi périodique d'une clef, par l'ordinateur central à chaque terminal. Chacun de ces derniers calcule alors un nouveau sceau ou signature à partir du texte du programme et de la nouvelle clef. Sur transmission par chaque terminal de cette nouvelle signature à l'ordinateur central, celui-ci le compare au sceau calculé pour chacun des terminaux, à partir du texte du programme de référence. Sur identité des signatures ou sceaux, les programmes seront considérés comme identiques.

En outre, le procédé et le dispositif objet de l'invention permettent de s'assurer de l'absence d'erreurs au niveau des progiciels diffusés auprès d'une nombreuse clientèle. Dans ce but, le prestataire diffusant le logiciel peut comparer le sceau du progiciel qui a été placé à l'origine auprès de la clientèle avec celui du programme réel, afin de prouver l'existence ou la non existence d'erreurs ou modifications.

Le procédé et le dispositif objet de l'invention peuvent également être utilisés avantageusement pour vérifier qu'aucun changement n'a pu être effectué sur des fichiers entre plusieurs utilisations périodiques de ces fichiers. De la même façon, la vérification de totaux de contrôle, de décomptes comptables ou financiers peuvent être effectués. Dans ce cas, l'utilisation du procédé et du dispositif objet de l'invention permettent de garantir qu'il n'y a pas eu de manipulation volontaires ou même d'erreurs involontaires dans les décomptes précités.

Une autre application particulièrement intéressante du procédé et du dispositif objet de l'invention consiste dans l'archivage d'informations, telles que des informations comptables. En effet, certaines lois nationales exigent que les informations comptables soient archivées pendant un temps déterminé, dix ans le plus souvent. Bien entendu, ces lois nationales exigent également des conditions pleinement satisfaisantes relativement à la sécurité de maintien de l'intégrité de l'information. L'archivage magnétique étant autorisé, la méthode et le dispositif objet de l'invention pourront avantageusement être utilisés pour vérifier que ces informations sont restées intactes et sans modification, même après de nombreuses années d'archivage.

En outre, le procédé et le dispositif objet de l'invention peuvent avantageusement être utilisés afin d'attribuer à chaque copie de sauvegarde des informations des bases de données, pour attribuer à ces dernières un sceau ou signature absolument représentatif du contenu de ces copies. Ainsi lorsqu'il est nécessaire d'utiliser les copies munies de leur sceau ou signature pour reconstituer l'information d'une base de données endommagée , la signature peut être vérifiée avant rechargement.

Enfin, le procédé et le dispositif objet de l'invention peuvent être utilisés pour s'assurer de l'identité à une date déterminée de fichiers utilisés par des filiales d'une même société localement et centralement. Dans ce cas, le calcul et la comparaison des seuls sceaux ou signatures correspondant au fichier permettent d'assurer et de garantir l'identité de ce fichier.

Bien entendu, le procédé et le dispositif objet de l'invention ne sont pas limités à la sauvegarde qualitative d'informations numérisées. Ils peuvent avantageusement être utilisés pour la génération ou création de clés chiffrées inviolables à partir d'une clé publique. Dans ce cas, il suffit bien sûr que l'émetteur et le destinataire de la clé chiffrée soient en mesure de mettre en oeuvre le procédé objet de l'invention à partir des paramètres secrets sur cette même clé publique, la transmission de cette dernière pouvant être librement accessible au public, et les paramètres secrets étant soit transmis de façon sûre, soit stockés sur un support inviolable, du genre carte à mémoire, et adressés tant à l'émetteur qu'au destinataire, pour appliquer le même traitement.

On a ainsi décrit un procédé et un dispositif de sauvegarde qualitative d'informations numérisées enregistrées sur un support effaçable ou modifiable, de très haute performance. Les hautes performances du procédé et du dispositif objet de l'invention concernent la solidité cryptographique de la signature élaborée, conformément au procédé de la présente invention. Cette solidité cryptographique apparaît résulter du fait qu'un texte donné peut engendrer sensiblement n'importe quelle signature ou sceau. Dans ces conditions, seule une recherche exhaustive permettrait de calculer la clef secrète à partir d'un texte et de son sceau ou signature. Le procédé et le dispositif objet de l'invention sont en outre remarquables en ce que un texte déterminé peut engendrer n'importe quelle signature, cette propriété apparaissant comme une garantie supplémentaire de solidité cryptographique. En outre, l'algorithme de signature est une fonction non commutative des données. Si l'on modifie n'importe quel sous-ensemble des données, celui-ci fût-il réduit à un chiffre, la signature sera totalement différente. Le procédé et le dispositif objet de l'invention peuvent en particulier être mis en oeuvre dans le cas de la transmission de données comptables telles que par exemple les données relatives à la compensation bancaire. Le choix d'une taille de signature, c'est-à-dire d'un nombre de caractères suffisant, exclut pratiquement une recherche exhaustive des clefs secrètes.

**Revendications**

1. Procédé de sauvegarde qualitative d'informations numérisées enregistrées sur un support effaçable ou modifiable, consistant à établir une signature chiffrée représentative des informations et de l'identité du détenteur desdites informations au moyen d'un algorithme de calcul, et à enregistrer celle-ci sur le support desdites informations, ledit procédé consistant en outre à enregistrer les paramètres de calcul de ladite signature sur au moins un support inviolable, l'algorithme de calcul étant un algorithme de chiffrement et de compression des informations à sauvegarder à partir d'au moins une clef secrète associée au signataire détenteur des informations, caractérisé en ce que, en vue d'établir ladite signature chiffrée représentative des informations et de l'identité du détenteur des informations, ledit algorithme de chiffrement consiste :

– à initialiser la création d'une suite de nombres aléatoires ou pseudo-aléatoires à plusieurs chiffres à partir de la ou des clefs secrètes, ladite suite de nombres comportant un même nombre de termes (Ci) que le nombre de caractères (Ii) de l'information à sauvegarder,

– à effectuer le produit scalaire (P) terme à terme de la suite de nombres aléatoires (Ci) et de l'information à sauvegarder (Ii),

$$P = \sum_{i=1}^{N} Ii * Ci$$

– à effectuer une réduction modulaire du produit scalaire modulo p, de façon à définir un nombre A = P modulo p dans lequel p est un nombre premier comportant un nombre de chiffres égal au nombre de caractères de la ou des clefs secrètes ou de la signature,

– à effectuer une exponentiation modulaire du nombre A de façon à définir un nombre $S = A^{*}e^{d}$ modulo q, dans lequel q est un autre nombre premier comportant un nombre de chiffres égal aux nombres de caractères de la ou des clefs secrètes ou de la signature, et d un ou plusieurs chiffres de la clef ou des clefs secrètes, le nombre S constituant la signature chiffrée.

2. Procédé selon la revendication 1, caractérisé en ce que au produit scalaire P est ajoutée une valeur aléatoire produit de nombres supplémentaires aléatoires ou pseudo-aléatoires $C_{N+K}$ et de valeurs numériques arbitraires telles que la date, l'heure, un numéro d'identification du détenteur d'informations ou nombre aléatoire.

3. Procédé selon la revendication 1, caractérisé en ce que aux caractères (Ii) de l'information à sauvegarder sont ajoutés, par concaténation, des chaînes de caractères représentatives de valeurs numériques significatives arbitraires telles que la date, l'heure, un numéro d'identification du détenteur d'informations ou nombre aléatoire.

4. Procédé selon l'une des revendications 1 à 3, caractérisé en ce que lesdites informations à sauvegarder (Ii) et les nombres aléatoires (Ci) sont subdivisés en blocs (Bj) contenant un nombre déterminé Q de caractères, le produit scalaire p étant calculé pour chacun des blocs (Bj) de façon à définir des produits scalaires partiels

$$Pj = \sum_{i}^{Q} Ii * Ci .$$

5. Procédé selon la revendication 4, caractérisé en ce qu'une signature partielle (Sj) est calculée pour chacun des blocs (Bj), la suite des signatures (Sj) constituant la signature représentative de l'ensemble des informations à sauvegarder.

6. Procédé selon l'une des revendications 1 à 5, caractérisé en ce que les nombres aléatoires ou pseudo-aléatoires (Ci) sont des nombres comportant un nombre 1 de chiffres ou caractères égal au nombre de caractères de la clef, les caractères (Ii) de l'information à sauvegarder étant groupés de façon que le nombre de chiffres de chaque terme Ci de la suite soit supérieur au nombre de caractères constituant un groupement.

7. Procédé selon l'une des revendications 1 à 6 , caractérisé en ce que pour une même quantité d'information à sauvegarder

$$\sum_i \bar{I}i,$$

ledit procédé consiste à calculer de manière itérative une pluralité (r) de signatures $(S_K)$ successives, lesdites signatures $(S_{K-1})$ étant successivement intégrées à l'information à sauvegarder

$$\sum_i I i + \sum_K^{r-1} S_K$$

pour calculer la signature d'ordre supérieur $S_K$.

8. Procédé selon l'une des revendications 1 à 7, caractérisé en ce que préalablement à son inscription sur le support des informations (Ii) ou sur le support inviolable ladite signature (S) est soumise en outre à un traitement de chiffrement à partir d'une clef secrète de chiffrement de façon à obtenir une signature chiffrée (Sc) présentant un nombre de caractères identique à celui de la signature.

9. Procédé selon l'une des revendications 1 à 8, caractérisé en ce que le support inviolable est constitué par une carte à mémoire protégée.

10. Procédé selon l'une des revendications 1 à 9 , caractérisé en ce que en vue d'assurer la transmission des informations sauvegardées selon l'une des revendications précédentes à un destinataire, ledit procédé consiste :

– à adresser ledit support inviolable sur lequel les paramètres de calcul de la signature chiffrée sont enregistrés audit destinataire,

– à transmettre lesdites informations sauvegardées et la signature chiffrée audit destinataire.

11. Procédé selon la revendication 10, caractérisé en ce que en vue de contrôler le contenu des données transmises et reçues par le destinataire, ledit procédé consiste en outre, à partir des paramètres de calcul de ladite signature chiffrée contenu dans le support inviolable :

– à établir une signature chiffrée de contrôle S′ à partir des informations sauvegardées reçues suite à la transmission,

– à comparer ladite signature chiffrée reçue par transmission et ladite signature chiffrée de contrôle, l'identité des informations sauvegardées et des informations reçues par le destinataire et l'origine authentique de ces informations étant obtenues à la coïncidence de la signature chiffrée et de la signature chiffrée de contrôle.

12. Procédé selon l'une des revendications 1 à 11, caractérisé en ce que la clef secrète constituant au moins une partie des paramètres de calcul de ladite signature est enregistrée dans la zone protégée d'un support inviolable, ledit support inviolable étant à la disposition du détenteur des informations à sauvegarder et/ou du destinataire.

13. Procédé selon l'une des revendications 1 à 12, caractérisé en ce que ladite clef secrète et la signature sont constituées par un mot comprenant un nombre de caractères identiques.

14. Procédé selon l'une des revendications 1 à 13, caractérisé en ce que la signature et/ou la clef est constituée par un mot comprenant des caractères alpha-numériques.

15. Procédé selon l'une des revendications 1 à 14, caractérisé en ce qu'il comprend :

– des premiers moyens de mémorisation (101) dans lesquels sont mémorisées la ou les clefs secrètes du détenteur signataire ou du destinataire des informations,

– des deuxièmes moyens de mémorisation (102) dans lesquels est mémorisé un programme de calcul d'une ou plusieurs signatures (S, Sc) selon l'une des revendications 1 à 16 précédentes,

– des moyens de calcul (103) de la ou des signatures (S′,Sc) et d'inscription (104) de ces signatures (S,Sc) sur le support des informations (Ii) à sauvegarder,

– des moyens de comparaison (105) de la signature (S,Sc) inscrite sur le support des informations avec la signature calculée,

– des moyens de validation (106) d'utilisation des informations sauvegardées sur coïncidence de la signature (S,Sc) calculée et de la signature enregistrée sur le support d'enregistrement des informations (Ii),

– des moyens périphériques (107) de saisie et/ou de visualisation des données.

16. Procédé selon la revendication 15, caractérisé en ce que les premiers et deuxièmes moyens de mémorisation sont constitués par des supports de mémorisation inviolables.

17. Procédé selon la revendication 16, caractérisé en ce que les supports de mémorisation inviolables sont constitués par des cartes à mémoire protégée.

18. Procédé selon l'une des revendications 15 à 17, caractérisé en ce qu'il est constitué par un ordinateur ou microordinateur.

19. Procédé selon l'une des revendications 15 à 17, caractérisé en ce que les moyens périphériques consistant en un terminal de visualisation du genre "Minitel" ledit dispositif comprend en outre :

– un lecteur de cartes à mémoire protégée,

– une cartouche enfichable comportant des mémoires mortes dans lesquelles est stocké le programme de calcul de la signature (S,Sc).

20. Procédé selon l'une des revendications 17 à 19, caractérisé en ce que ladite signature (S,Sc) étant soumise en outre à un traitement de chiffrement conformément à la revendication 16 précédente, un programme de chiffrement est mémorisé dans les zones protégées du support de mémorisation inviolable, le calcul de chiffrement de la signature S étant réalisé au sein de la carte à mémoire.

21. Procédé selon l'une des revendications 15 à 20, caractérisé en ce qu'il comporte en mémoire permanente un programme de gestion de type "menu" permettant sur incitation de l'utilisateur signataire par affichage de pages écran de dialogue interactif :
– d'introduire le code personnel de l'utilisateur signataire ou destinataire,
– d'introduire des paramètres arbitraires ou aléatoires tels que la date, l'heure ou des chiffres aléatoires,
– d'introduire l'information

$$\left( \sum_i Ii \right)$$

à sauvegarder.

22. Procédé selon la revendication 21, caractérisé en ce que le programme de gestion de type "menu" permet en outre à un utilisateur :
– d'introduire la signature à vérifier pour comparaison à la signature stockée ou transmise,
– d'afficher la validation de cette signature.

23. Procédé selon l'une des revendications 21 ou 22, caractérisé en ce que lesdites pages écran comportent une page écran de signalisation de risque de destruction de zones mémoires du support inviolable après un nombre déterminé d'essais infructueux de validation de signature.

24. Procédé selon l'une des revendications 22 ou 23, caractérisé en ce que les procédures de signature et de validation de signature sont séparées, la procédé de validation de signature étant conditionnellement autorisée pour des codes d'identification de l'utilisateur identifiant distincts des codes d'identification de l'utilisateur signataire.

25. Procédé selon l'une des revendications 15 à 24, caractérisé en ce que pour un nombre aléatoire d'identification déterminé introduit par l'utilisateur, possédant le code d'identification, l'introduction d'une pseudo information à sauvegarder consistant en une répétition à l'identique des caractères (Ii) sur un nombre arbitraire de caractères permet d'engendrer un code d'accès aléatoire inviolable temporaire représentatif de cet utilisateur.

26. Procédé selon la renvendication 25, caractérisé en ce que sur transmission du code d'identification et du nombre aléatoire d'identification à un utilisateur récepteur, la procédure de validation du code d'accès aléatoire inviolable temporaire est autorisée.

**Patentansprüche**

1. Verfahren zum qualitativen Sichern von digitalen Informationen, die auf einem löschbaren oder veränderbaren Träger gespeichert sind, das das Schaffen einer verschlüsselten Kennzeichnung, welche Informationen und die Identität des Inhabers der Informationen mittels eines Rechenalgorithmus widerspiegelt, und das Speichern desselben auf dem Träger der Informationen umfaßt, wobei das Verfahren ferner das Speichern der Rechenparameter für die Kennzeichnung auf mindestens einem nicht löschbaren Träger umfaßt, wobei der Rechenalgorithmus ein Algorithmus zum Verschlüsseln und Komprimieren der zu sichernden Informationen mit mindestens einem Geheimschlüssel darstellt, welcher der Unterschrift des Inhabers der Informationen zugeordnet ist, dadurch gekennzeichnet, daß im Hinblick auf das Schaffen der verschlüsselten Kennzeichnung, welche die Informationen und die Identität des Inhabers der Informationen widerspiegelt, der Verschlüsselungsalgorithmus folgendes umfaßt:
– Initialisieren der Schaffung einer Folge von Zufallszahlen oder Pseudo-Zufallszahlen mit mehrern Chiffren aus dem oder den Geheimschlüssel(n), wobei die Zahlenfolge eine Anzahl Terme (Ci) umfaßt, die der Anzahl Zeichen (Ii) der zu sichernden Informationen gleich ist,
– termweises Erzeugen des Skalarprodukts (P) der Folge Zufallszahlen (Ci) und der zu sichernden Informationen (Ii),

$$P = \sum_{i=1}^{N} Ii \cdot Ci$$

– Durchführen einer modularen Reduktion des Skalaprodukts Modulo p, und zwar derart, daß eine Zahl A = P Modulo p definiert wird, wobei p eine erste Zahl ist, die eine Chiffrenzahl umfaßt, welche der Zahl der Zeichen des oder der Geheimschlüssel(s) oder der Kennzeichnung gleich ist,
– Ausführen einer modularen Exponenzierung der Zahl A, und zwar derart, daß eine Zahl S = A\*e^d Modulo q definiert wird, wobei q eine anderer erste Zahl ist, die eine Chiffrenzahl umfaßt, welche den Zahlen der Zeichen des oder der Geheimschlüssel (s) oder der Kennzeichnung gleich ist, und d einen oder mehrere Chiffre(n) des oder der Geheimschlüssel(s) darstellt/darstellen, wobei die Zahl S die verschlüsselte Kennzeichnung darstellt.

2. Verfahren nach Anspruch 1, dadurch gekennzeichnet, daß dem Skalarprodukt P ein Zufallswert angehängt wird, der aus zusätzlichen Zufallszahlen oder Pseudo-Zufallszahlen $C_{N+K}$ und willkürlichen digitalen Werten erzeugt wird, wie etwa das Datum, die Uhrzeit, eine Identifikationsnummer des Inhabers der Informationen oder eine Zufallszahl.

3. Verfahren nach Anspruch 1, dadurch gekennzeichnet, daß dem Zeichen (Ii) der zu sichernden Informationen durch Verkettung Ketten von Zeichen angehängt werden, die bezeichnende arbiträre numerische Werte darstellen, wie etwa das Datum, die Uhrzeit, eine Identifikationsnummer des Inhabers der Informationen oder eine Zufallszahl.

4. Verfahren nach einem der Ansprüche 1 bis 3, dadurch gekennzeichnet, daß die zu sichernder Daten (Ii) und die Zufallszahlen (Ci) in Blöcke (Bj) unterteilt sind, die eine vorbestimmte Anzahl Q von Zeichen umfassen, wobei das Skalarprodukt P für jeden der Blöcke (Bj) derart berechnet wird, das partielle Skalarprodukte definiert werden

$$Pj = \sum_{i}^{Q} Ii * Ci .$$

5. verfahren nach Anspruch 4, dadurch gekennzeichnet, daß eine partielle Kennzeichnung (Sj) für jeden der Blöcke (Bj) berechnet wird, wobei die Folge der Kennzeichnungen (Sj) diejenige Kennzeichnung umfaßt, welche die Gesammtheit der zu sichernder Informationen darstellt.

6. Verfahren nach einem der Ansprüche 1 bis 5, dadurch gekennzeichnet, daß die Zufallszahlen oder Pseudo-Zufallszahlen (Ci) Zahlen sind, die einen Anzahl 1 von Chiffren oder Zeichen beinhalten, die der Anzahl der Zeichen des Schlüssels gleich ist, wobei die Zeichen (Ii) der zu sichernden Informationen derart gruppiert sind, daß die Anzahl von Chiffren eines jeden Terms Ci der Folge größer als die Anzahl von Zeichen in eine Gruppe ist.

7. Verfahren nach einem der Ansprüche 1 bis 6, dadurch gekennzeichnet, daß für eine einzige Menge von zu sichernden Daten

$$\sum_{i} Ii$$

das Verfahren iteratives Berechnen einer Mehrzahl (r) von Kennzeichnugen $(S_K)$ nacheinander beinhaltet, wobei die Kennzeichnungen $(S_{K-1})$ nacheinander über der zu sichernden Informationen integriert werden,

$$\sum_{i} Ii + \sum_{K}^{r-i} S_{K'}$$

und zwar zum Berechnen der Kennzeichnung $S_K$

höherer Ordnung.

8. Verfahren nach einem der Ansprüche 1 bis 7, dadurch gekennzeichnet, daß vor ihrem Aufzeichnen auf dem Träger der Informationen (Ii) oder auf dem nicht löschbaren Träger die genannte Kennzeichnung (S) ferner einer Chiffrierungsbehandlung unterzogen wird, und zwar mit einem Geheimschlüssel für die Chiffrierung derart, daß eine chiffrierte Kennzeichnung (Sc) erhalten wird, die eine Anzahl von Zeichen repräsentiert, welche derjenigen der Kennzeichnung gleich ist.

9. Verfahren nach einem der Ansprüche 1 bis 8, dadurch gekennzeichnet, daß der nicht löschbare Träger von einer geschützten Speicherkarte gebildet ist.

10. Verfahren nach einem der Ansprüche 1 bis 9, dadurch gekennzeichnet, daß im Hinblick auf die Gewährleistung der Übertragung der gesicherten Informationen nach einem der vorangehenden Ansprüche an einen Bestimmungsort das Verfahren umfaßt:
 - Adressieren des nicht löschbaren Trägers, auf dem die Berechnungsparameter der chiffrierten Kennzeichnung für den Bestimmungsort aufgezeichnet sind,
 - Übertragen der gesicherten Informationen und der chiffrierten Kennzeichnung an den Bestimmungsort.

11. Verfahren nach Anspruch 10, dadurch gekennzeichnet, daß im Hinblick auf die Überwachung des Inhalts derjenigen Daten, die übertragen und von dem Bestimmungsort empfangen worden sind, das Verfahren, ausgehend von den Berechnungsparametern der chiffrierten Kennzeichnung, die auf dem unveränderlichen Träger enthalten ist, folgendes umfaßt:
 - Schaffen einer chiffrierten Kennzeichnung S' zur Überwachung aus den gesicherten Informationen, die infolge der Übertragung empfangen worden sind,
 - Vergleichen der verschlüsselten Kennzeichnung, die durch Übertragung erhalten worden ist, und der genannten verschlüsselten Kennzeichnung zur Überwachung, wobei die Identität der gesicherten Informationen und der von dem Bestimmungsort empfangenen Informationen sowie der autentifizierte Ursprung der Informationen bei Übereinstimmung der verschlüsselten Kennzeichnung und der verschlüsselten Kennzeichnung zur Überwachung erhalten werden.

12. Verfahren nach einem der Ansprüche 1 bis 11, dadurch gekennzeichnet, daß der Geheimschlüssel, der mindestens einen Teil der Berechnungsparameter der Kennzeichnung beinhaltet, in der geschützten Zone eines nicht löschbaren Trägers gespeichert ist, wobei der nicht löschbare Träger dem Inhaber der zu schützenden Informationen und/oder des Bestimmungsorts zur Verfügung steht.

13. Verfahren nach einem der Ansprüche 1 bis 12, dadurch gekennzeichnet, daß der genannte Geheimschlüssel und die Kennzeichnung ein Wort umfassen, daß einen Anzahl gleicher Zeichen beinhaltet.

14. Verfahren nach einem der Ansprüche 1 bis 13, dadurch gekennzeichnet, daß die Kennzeichnung und/oder der Schlüssel ein Wort umfassen, daß alpha-numerische Zeichen beinhaltet.

15. Verfahren nach einem der Ansprüche 1 bis 14, dadurch gekennzeichnet, daß es folgendes umfaßt:

– erste Speichermittel (101) auf denen der oder die Geheimschlüssel der Inhaberunterschrift oder des Bestimmungsorts der Informationen gespeichert sind,

– zweite Speichermittel (102), auf denen ein Programm zur Berechnung einer oder mehrerer Kennzeichnung(en) (S, Sc) nach einem der vorangehenden Ansprüche 1 bis 14 gespeichert ist-/sind,

– Berechnungsmittel (103) für die Kennzeichnung(en) (S',Sc) und Mittel (104) zum Einschreiben der Kennzeichnungen (S, Sc) auf den Träger der zu sichernden Informationen (Ii),

– Mittel (105) zum Vergleichen der auf dem Träger der Informationen aufgezeichneten Kennzeichnung (S, Sc), mit der berechneten Kennzeichnung,

– Validierungsmittel (106) zur Verwendung der gesicherten Informationen bei Übereinstimmung der berechneten Kennzeichnung (S, Sc) und der auf dem Träger zum Einspeichern der Informationen (Ii) gespeicherten Kennzeichnung,

– periphere Einrichtungen (107) zum Erfassen und/oder Sichtbarmachen von Daten.

16. Verfahren nach Anspruch 15, dadurch gekennzeichnet, daß die ersten und zweiten Speichermittel von Trägern zur nicht löschbaren Speicherung gebildet sind.

17. Verfahren nach Anspruch 16, dadurch gekennzeichnet, daß die Träger zur nicht löschbaren Speicherung von geschützten Speicherkarten gebildet sind.

18. Verfahren nach einem der Ansprüche 15 bis 17, dadurch gekennzeichnet, daß es von einem Computer oder Mikrocomputer gebildet ist.

19. Verfahren nach einem der Ansprüche 15 bis 17, dadurch gekennzeichnet, daß die peripheren Geräte ein Sichtgerät der Art "Minitel" umfassen, wobei die genannte Vorrichtung ferner umfaßt:

– einen Leser für die geschützten Speicherkarten,

– einen Steckeinschub mit Lesespeichern, in denen das Programm zur Berechnung der Kennzeichnung (S, Sc) gespeichert ist.

20. Verfahren nach einem der Ansprüche 17 bis 19, dadurch gekennzeichnet, daß die genannte Kennzeichnung (S, Sc) ferner einer Chiffrierungsbehandlung nach Anspruch 16 unterzogen wird, wobei ein Chiffrierungsprogramm in den geschützten Zonen des Trägers für die nicht löschbare Speicherung gespeichert ist, wobei die Berechnung der Verschlüsselung der Kennzeichnung S innerhalb der Speicherkarte erfolgt.

21. Verfahren nach einem der Ansprüche 15 bis 20, dadurch gekennzeichnet, daß es ein permanent gespeichertes Programm mit Steuerung vom Typ "Menü" umfaßt, das auf Veranlassung des unterzeichneten Benutzers durch Anzeige von Bildschirmseiten im interaktiven Dialog erlaubt:

– Eingeben des persönlichen Codes des unterzeichneten Benutzers oder des Bestimmungsorts,

– Eingeben arbiträrer oder zufälliger Parameter, wie etwa Datum, Uhrzeit oder zufällige Chiffren,

– Eingeben der zu sichernden Informationen

$$( \neq Ii ) .$$

22. Verfahren nach Anspruch 21, dadurch gekennzeichnet, daß das Steuerprogramm von Typ "Menü" ferner einen Benutzer dazu in die Lage versetzt:

– die zu verifizierende Kennzeichnung einzugeben, für den Vergleich mit der gespeicherten oder übertragenden Kennzeichnung,

– die Validierung der Kennzeichnung anzuzeigen.

23. Verfahren nach einem der Ansprüche 21 oder 22, dadurch gekennzeichnet, daß die Bildschirmseiten eine Bildschirmseite der Signalisierung von Gefahren betreffend die Zerstörung von Speicherzonen des nicht zerstörbaren Trägers umfassen, und zwar nach einer bestimmten Anzahl fehlgeschlagener Versuche zur Validlerung der Kennzeichnung.

24. Verfahren nach einem der Ansprüche 22 oder 23, dadurch gekennzeichnet, daß die Vorgänge der Kennzeichnung und der Validierung der Kennzeichnung voneinander getrennt sind, wobei das Verfahren der Validierung der Kennzeichnung bedingt für die Identifikations-Codes des Benutzers autorisiert ist, die Unterschiede der Identifikations-Codes des unterzeichnenden Benutzers kennzeichnen.

25. Verfahren nach einem der Ansprüche 15 bis 24, dadurch gekennzeichnet, daß für eine bestimmte Zufallszahl der bestimmten Identifikation, die von dem Benutzer eingegeben worden ist, und zwar einschlielllich Identifikations-Code, das Eingeben einer zu sichernden Pseudo-Information eine identische Wiederholung von Zeichen (Ii) für eine abritäre Zahl von Zeichen umfaßt, was die Erzeugung eines zufälligen Zugriffscodes erlaubt, der zeitweise unveränderlich ist und den Benutzer repräsentiert.

26. Verfahren nach Anspruch 25, dadurch gekennzeichnet, daß bei der Übertragung des Identifikations-Codes und der Identifikations-Zufallszahl an einen empfangenden Benutzer das Verfahren der Validierung des zufälligen zeitweise unveränderlichen Zugriffscodes autorisiert wird.

## Claims

1. Qualitative protection method for digital information recorded on a medium that can be erased or modified which consists in :

– establishing an encrypted signature representative of the information and of the identity of the holder of said information by means of a computation algorithm and recording the signature on the same medium as said information, and

– recording the parameters for computing said signature on at least one inviolable medium, the computation algorithm being an algorithm for encryption and compression of the information to be protected on the basis of at least one secret key associated with the signatory holder of the information, characterized in that, for the purpose of establishing said encrypted signature representative of the information and of the identity of the information holder, said encryption algorithm consists in :

– initialising the creation of a sequence of random or pseudo-random numbers on several digits from the secret key or keys, said sequence of numbers comprising the same number (Ci) of terms as the number (Ii) of characters in the information to be protected,

– establishing term by term the scalar product (P) of the sequence of random numbers (Ci) and the information (Ii) to be protected, as defined by the equation :

$$P = \sum_{i=1}^{N} Ii * Ci$$

– applying modular reduction to the scalar product modulo $\underline{p}$ so as to define a number A = P modulo $\underline{p}$ in which $\underline{p}$ is a prime number comprising the same number of digits as there are characters in the secret key or keys or the signature, and

– applying modular exponentiation to the number A so as to define a number S = A * e$^d$ modulo $\underline{q}$ in which $\underline{q}$ is another prime number comprising the same number of digits as there are characters in the secret key or keys or the signature and $\underline{d}$ is one or more digits of the secret key or keys, the number S constituting the encrypted signature.

2. Method according to claim 1, wherein there is added to the scalar product (P) a random value which is the product of additional random or pseudo- random

numbers (CN + $\underline{k}$) and arbitrary numeric values such as the date, the time, an identification number of the information holder or a random number.

3. Method according to claim 1, wherein there are added by concatenation to the characters (Ii) of the information to be protected character strings representative of arbitrary meaningful numeric values such as the date, the time, an identification number of the information holder or a random number.

4. Method according to one of claims 1 through 3, wherein said information to be protected (Ii) and the random numbers (Ci) are subdivided into blocks (Bj) containing a specific number Q of characters, the scalar product (P) being computed for each of the blocks (Bj) in such a way as to define partial scalar products as follows :

$$Pj = \sum_{i}^{Q} Ii * Ci$$

5. Method according to claim 4, wherein a partial signature (Sj) is computed for each of the blocks (Bj), the sequence of signatures constituting the signature representative of all of the information to be protected.

6. Method according to one of claims 1 through 5, wherein the random or pseudo-random numbers (Ci) are numbers comprising a number of digits or characters equal to the number of characters of the key, the characters (Ii) of the information to be protected being grouped in such a way that the number of digits of each term of the sequence is greater than the number of characters constituting a group.

7. Method according to one of claims 1 through 6, wherein

$$\left( \sum_{i} Ii \right)$$

for the same quantity of information to be protected said method consists in computing iteratively a plurality (r) of successive signatures ($S_K$), said signatures ($S_{K-1}$) being successively integrated into the information to be protected

$$\sum_{i} Ii + \sum_{K}^{r-1} S_K$$

to compute the higher order signature ($S_K$)

8. Method according to one of claims 1 through 7, wherein before it is written onto the same medium as the information (Ii) or onto the inviolable medium said signature (S) is further subjected to encryption processing on the basis of a secret encryption key in such a way as to obtain an encrypted signature (Sc) having the same number of characters as the signature.

9. Method according to one of claims 1 through 8, wherein the inviolable medium is a protected memory card.

10. Method according to one of claims 1 through 9, wherein for transmitting information protected in accordance with any one of the preceding claims to an addressee, said method consists in :
– sending said inviolable medium on which the parameters for computing the encrypted signature are recorded to said addressee, and
– transmitting said protected information and the encrypted signature to said addressee.

11. Method according to claim 10, wherein for the purpose of checking the content of the data transmitted and received by the addressee said method further consists in, on the basis of the parameters for computing said encrypted signature contained on the inviolable medium :
– establishing an encrypted control signature S′ on the basis of the protected information received after transmission, and
– comparing said encrypted signature received after transmission and said encrygted control signature, identity of the protected information and of the information received by the addressee and the authenticated source of this information being obtained when the encrypted signature is identical to the encrypted control signature.

12. Method according to one of claims 1 through 11, wherein the secret key constituting at least part of the parameters for computing said signature is recorded in the protected area of an inviolable medium, said inviolable medium being available to the holder of the information to be protected and/or to the addressee.

13. Method according to one of claims 1 through 12, wherein said secret key and the signature are each constituted by a word comprising the same number of characters.

14. Method according to one of claims 1 through 13, wherein the signature and/or the key consists of a word comprising alphanumeric characters.

15. Method according to one of claims 1 through 14, characterized in that it comprises :
– first storage means (101) in which are stored the secret key or keys of the signatory holder or the addressee of the information,
– second storage means (102) in which is stored a program for computing one or more signatures (S, Sc) according to any one of the foregoing claims 1 through 14,
– means (103) for computing the signature or signatures (S, Sc) and means (104) for writing these signatures onto the same medium as the information (Ii) to be protected,
– means (105) for comparing the signature written onto the same medium as the information with the computed signature (S, Sc),

– means (106) for validating use of the protected information when the computed signature and the signature recorded on the medium on which the information is recorded are identical, and
– peripheral means (107) for input and/or display of date.

16. Method according to claim 15, wherein the first and second storage means are inviolable storage media.

17. Method according to claim 16, wherein the inviolable storage media are protected memory cards.

18. Method according to one of claims 15 through 17, wherein comprising a computer or microcomputer.

19. Method according to one of claims 15 through 17, wherein the peripheral means consist in a "Minitel" type visual display terminal and said device further comprises :
– a protected memory card reader, and
– a plug-in cartidge comprising read only memories in which is stored the program for computing the signature.

20. Method according to one of claims 17 through 19, wherein said signature being further subjected to encryption processing in accordance with the foregoing claim 8, an encryption program is stored in the protected areas of the inviolable storage medium, the encryption computation for the signature being effected within the memory card.

21. Method according to one of claims 15 through 20, wherein comprising in permanent memory a "menu" type management program providing for, at the initiative of the signatory user and by display of interactive dialogue screen pages :
– input of the personal code of the signatory or addressee user,
– input of arbitrary or random parameters such as the date, the time or random numbers, and
– input of the information to be protected.

22. Method according to claim 21, wherein the "menu" type management program also enables a user :
– to input the signature to be verified for comparison with the signature stored or transmitted, and
– to display the validation of this signature.

23. Method according to either of claims 21 or 22, wherein said screen pages comprise a screen page warning of the risk of desctruction of memory areas of the inviolable medium after a predetermined number of unsuccessful attempts to validate the signature.

24. Method according to either of claims 22 or 23, wherein the signature and signature validation procedures are separate, the signature validation process being conditionally authorised for user identification codes for the user identifying himself separate from the signatory user identification codes.

25. Method according to one of claims 15 through 24, wherein for a particular identification random number input by the user possessing the identification code, the input of pseudo-information to be protected consisting in identical repetition of characters over an arbitrary number of characters makes it possible to generate a temporary inviolable random access code representative of this user.

26. Method according to claim 25, wherein on transmission of the identification code and of the identification random number to a receiving user, the procedure for validation of the temporary inviolable random access code is authorised.

FIG-1

FIG-2

FIG-3

| 1 | | Ci | | | N | |
|---|---|---|---|---|---|---|
| 1230 | 1241 | 9841 | | | 7650 | 5630 |

| D | B | A | | F | i | N |
|---|---|---|---|---|---|---|

$Ii$

$\sum\limits_{i} Ii$

$$P = \sum\limits_{i}^{N} Ci * Ii$$

$$A = P \bmod p$$

$$S = A * e^d \bmod q$$

$\rightarrow S$

## FIG-4

| | $Ii$ | | | N | | $I_{n+k}$ |
|---|---|---|---|---|---|---|
| D | B | A | | | | |

$\sum Ii$ $\oplus$ $A_{n+k}$

| | | | | N | | |
|---|---|---|---|---|---|---|

$Ci$ $\oplus$ $C_{n+k}$

## FIG-5

**FIG-6**

**FIG-7**

20

FIG-8

FIG-9

Introduction du code
secret
du signataire ——— 1000

Introduction ou production
d'éléments aléatoires
Date, nombres tirés au hasard ——— 1001

Introduction
du
message ou texte ——— 1002

Introduction de la ou des clés
secrètes et de l'identifiant ——— 1003

Fonction:    _ Chiffrement
             _ Compression ——— 1004

Obtention
signature        S ——— 1005

Affichage et
inscription sur support
informations et/ou
support inviolable ——— 1006

1007 —— Introduction signature
controle . Comparaison de
signatures à signature de
controle S'

1009 —— Invalidation

1008 —— Validation

1010 —— Comptabilisation
nombre essais

1011 —— Après 3 essais
destruction support

## FIG-10